# EUROPÄISCHE PATENTANMELDUNG

(11) **EP 1 403 863 A2**
(43) Veröffentlichungstag der Anmeldung: **31.03.2004**
(21) Anmeldenummer: 03010318.8
(22) Anmeldetag: 07.05.2003
(51) Int. Cl.: G11B 19/02

(54) **Vorrichtung und Verfahren zum Auffinden und Darstellen von Informationen**

(30) Priorität: 31.05.2002 DE 10224304
(71) Anmelder: Heidelberger Druckmaschinen Aktiengesellschaft, 69115 Heidelberg (DE)
(72) Erfinder: Brand, Michael, 69168 Wiesloch (DE); Steigleder, Frank, 76137 Karlsruhe (DE)

(57) **Zusammenfassung**

Die vorliegende Erfindung betrifft eine Vorrichtung und Verfahren zum Auffinden von Informationselementen (1) in einem oder mehreren Objekten (7), wobei die Informationselemente (1) in einer Speichervorrichtung abspeicherbar sind, wobei die Objekte (7) mittels einer graphischen Benutzeroberfläche (18) auf einer Anzeigevorrichtung darstellbar sind. Die vorliegende Erfindung zeichnet sich dadurch aus, dass die Informationselemente (1) in einem Koordinatensystem eines graphisch dargestellten Objektes (7) angeordnet sind, so dass jeden Informationselement (1) wenigstens ein Koordinatenpunkt im graphisch dargestellten Objekt (7) zugeordnet ist, dass zum Auffinden des gewünschten Informationselements (10) mittels der graphischen Benutzeroberfläche (18) wenigstens ein in der Größe und Form variables Auswahlfenster (6) vorhanden ist, mit welchem eine beliebig große Teilmenge von Koordinatenpunkten und zugehörigen Informationselementen (1) des Objektes (7) auswählbar ist und das die ausgewählten Informationselemente (9, 10) auf der graphischen Benutzeroberfläche (18) der Anzeigevorrichtung darstellbar sind.

## Beschreibung

Die vorliegende Erfindung betrifft eine Vorrichtung und ein Verfahren zum Auffinden von Informationselementen in einem oder mehreren Objekten, wobei die Informationselemente in digitaler Form in einer Speichervorrichtung abspeicherbar sind und die Objekte mittels einer graphischen Benutzeroberfläche auf einer Anzeigevorrichtung darstellbar sind.

Bei heutigen komplexen Produkten des Maschinenbaus wird der Benutzer bezüglich der Bedienung und dem Auffinden von zu wartenden und evt. auszutauschenden Bauteilen häufig vor unlösbare Probleme gestellt. Jeder Hersteller verwendet für bestimmte Bauteile seiner Maschine unterschiedliche Namen und hat die zur Maschine gehörige Bedienungsund Wartungsanleitung unterschiedlich strukturiert. Um sich in der Bedienungs- und Wartungsanleitung zurechtzufinden, muss der Benutzer daher oft mit der Terminologie der verwendeten Begriffe für einzelne Teile seiner Maschine vertraut sein. Zu den betroffenen Maschinen zählen z. B. Druckmaschinen, Werkzeugmaschinen aber auch Automobile, Lastwagen, fahrbare Mobilkräne, etc..

Um dem Bediener oder Benutzer das Auffinden bestimmter zu wartender oder auszutauschender Teile bzw. die Bedienung seiner Maschine zu erleichtern, werden neben den herkömmlichen meist sehr umfangreichen und dicken Handbüchern für Bedienung und Wartung zunehmend auch sogenannte Online-Bedienungs- und Wartungsanleitungen in die jeweilige Maschine integriert. Der Benutzer oder Bediener kann sich diese Anleitung z.B. auf einem ohnehin an der Maschine vorhandenen oder in die Maschine integrierten Bildschirm anzeigen lassen kann. Dabei gibt es Lösungen, bei denen das herkömmliche Handbuch aus Papier eins zu eins in ein PDF- oder HTML-Dokument in Software umgesetzt wird. Hierbei handelt es sich um klassische Baumstrukturen mit Inhaltsverzeichnissen analog zu Papierpublikationen. Die Vorteile moderner Software gestützter Navigations- und Recherchemethoden werden so jedoch nicht genutzt.

Weiterhin ist aus dem Internet-Bereich eine Struktur mit sogenannten "Hyper-Links" bekannt, d.h. es finden Verweise aus gekennzeichneten Objekten, seien es Wörter oder Zeichnungen, auf weitere Informationsquellen statt, wobei der Benutzer von "Hyper-Link" zu "Hyper-Link" navigiert. Dies ist jedoch sehr unstrukturiert und kostet viel Zeit, da der Benutzer sich schnell auf Abwegen wiederfindet.

Es ist daher Aufgabe der vorliegenden Erfindung, eine Vorrichtung und ein Verfahren zur erleichterten Bedienung und zum erleichterten Auffinden von Bauteilen oder Komponenten einer Maschine oder eines ähnlich komplex gestalteten Objektes zu schaffen, welche möglichst ohne große Vorkenntnisse der Maschine bzw. der dazugehörigen Terminologie des Maschinenherstellers beim Benutzer oder Bediener auskommt.

Erfindungsgemäß wird diese Aufgabe durch eine Vorrichtung gemäß Patentanspruch 1 und ein Verfahren gemäß Patentanspruch 15 gelöst. Weitere vorteilhafte Ausgestaltungen der Erfindung ergeben sich aus den jeweiligen Unteransprüchen sowie den Zeichnungen.

Der große Vorteil der vorliegenden Erfindung besteht darin, dass der Benutzer einer Maschine ihre Bedienung und Wartung rein visuell erlernen kann. Dazu muss die betreffende Maschine einen Rechner aufweisen bzw. es muss ein entsprechender Rechner in der Nähe der Maschine vorhanden sein. Dies kann z. B. ein handelsüblichen PC oder Laptop bestehend aus Prozessor, Arbeitsspeicher und Festplattenspeicher mit entsprechenden Schnittstellen zu Peripheriegeräten sein. Der Festplattenspeicher des Rechners enthält die für die Bedienung notwendigen Teile der Maschine sowie die zu wartenden Teile der Maschine in Form von Informationselementen in digitalisierter Form. Verfügt der Rechner über eine Schnittstelle zur Maschine, so können dadurch Daten ausgetauscht werden, welche bestimmte Funktionen und Abläufe des erfindungsgemäßen Verfahrens und der erfindungsgemäßen Vorrichtung in Abhängigkeit des Ausbauzustands und des derzeitigen Funktionszustands der Maschine sperren. Des weiteren ist zweckmäßiger Weise ein Monitor als Anzeigevorrichtung vorhanden, auf dem die einzelnen Informationselemente und die zu erklärenden Objekte, die Maschine(n), mittels einer graphischen Benutzeroberfläche darstellbar sind. Bei manchen Maschinen, z.B. modernen Druckmaschinen, ist ohnehin eine Anzeigevorrichtung, insbesondere ein TFT-Flachbildschirm vorhanden, und ein entsprechender PC ist ebenfalls integriert. Daraus ergibt sich der große Vorteil der Erfindung, dass kein besonders hoher Aufwand betrieben werden muss, um vorhandene moderne Druckmaschinen mit der erfindungsgemäßen Vorrichtung auszurüsten.

Das darzustellende Objekt, die Maschine, wird erfindungsgemäß mit einem Koordinatensystem überzogen, so dass jedes Informationselement, also die Bauteile oder Baugruppen der Maschine, einem bestimmten Punkt im Koordinatensystem zugeordnet ist. Selbstverständlich kann so ein Informationselement auch mehrere Koordinatenpunkte aufweisen, wenn es räumlich ausgedehnter ist oder aus mehreren weiteren Bauteilen oder Baugruppen zusammengesetzt ist. Damit der Benutzer die entsprechenden Informationselemente auf seiner Anzeigevorrichtung finden kann, weist die graphische Benutzeroberfläche ein in Größe und Form variables Auswahlfenster auf, welches über das in der graphischen Benutzeroberfläche angezeigte Objekt hinweggezogen werden kann. Auf diese Art und Weise ist es möglich entweder das gesamte Objekt oder vom Auswahlfenster begrenzte Teile eines Objekts zu erfassen. Je nachdem, welche Koordinatenpunkte dann von dem Auswahlfenster erfasst sind, werden die mit diesen Koordinatenpunkten korrelierenden Teile des Objekts in einer separaten Liste oder in einem separaten Fenster der graphischen Benutzeroberfläche angezeigt. Somit kann der Benutzer rein visuell bestimmte Teile eines Objektes, also der Maschine, gezielt auswählen, ohne dass er die Namen der einzelnen Informationselemente kennen muss. So ist z. B. bei einer Druckmaschine visuell ein Druckzylinder immer problemlos zu identifizieren, unabhängig davon wie der einzelne Hersteller diesen nun genau bezeichnet. Durch das visuelle Auffinden der Bedienelemente und der zu wartenden Teile wird der Lernprozess bei einer neuen Maschine wesentlich erleichtert, so dass der Benutzer einen erheblichen Zeitvorteil erhält und damit auch Geld spart.

In einer ersten vorteilhaften Ausgestaltung der Erfindung ist vorgesehen, dass die Koordinatenpunkte Punkte eines zweidimensionalen oder dreidimensionalen Koordinatensystems sind. Ein zweidimensionales Koordinatensystem bietet sich an, wenn die anzuzeigenden Informationselemente in einer Ebene darstellbar sind. In diesem Fall reicht ein zweidimensionales Koordinatensystem aus, da sich hier alle Informationselemente auf der graphischen Benutzeroberfläche nebeneinander befinden. Bei dreidimensionalen Objekten wie z. B. einer Druckmaschine bietet ein dreidimensionales Koordinatensystem den Vorteil, dass auch Bauteile leicht aufzufinden sind, welche sich in verschiedenen Ebenen befinden. Mit einem dreidimensionalen Koordinatensystem lassen sich also problemlos beliebige dreidimensionale Objekte graphisch darstellen und sämtliche in ihnen vorhandenen Informationselemente örtlich zuordnen, so dass der Benutzer in allen drei Dimensionen suchen kann.

Die nächste Ausgestaltung der Erfindung sieht vor, dass die ausgewählten Informationselemente auf der Anzeigevorrichtung in einer strukturierten Reihenfolge darstellbar sind. Hat der Benutzer mittels des Auswahlfensters auf der graphischen Benutzeroberfläche eine bestimmte Menge an Informationselementen ausgewählt, so werden diese Informationselemente in einer Liste oder einer anderen Darstellungsform auf der graphischen Benutzeroberfläche angezeigt. Dabei ist es von Vorteil, wenn die ausgewählten Informationselemente in einer strukturierten Reihenfolge, insbesondere in alphabetischer Reihenfolge von oben nach unten oder von links nach rechts dargestellt werden. Auf diese Art und Weise wird auch eine etwaige weitere Auswahl aus der bisherigen Auswahl von Informationselementen erleichtert.

Des weiteren ist vorteilhafter Weise vorgesehen, dass die Koordinatenpunkte Punkte eines kartesischen Koordinatensystems sind. Die Eigenschaft des kartesischen Koordinatensystems, das alle Raumachsen senkrecht aufeinander stehen, erlaubt eine einfache und präzise Zuordnung der Informationselemente in einem dreidimensionalen darzustellenden Objekt. Hier gibt es für Höhe, Tiefe und Breite jeweils eine Koordinatenachse, wobei die Koordinatenachsen senkrecht aufeinander stehen. Diese Form erlaubt auch ein einfaches Berechnen der von einem Auswahlfenster ausgewählten Informationselemente durch den Rechner der erfindungsgemäßen Vorrichtung, so dass kein aufwendiges Programm für die Steuerung der erfindungsgemäßen Vorrichtung vorzusehen ist.

Eine besonders vorteilhafte Ausgestaltung der vorliegenden Erfindung ergibt sich dadurch, dass die Koordinatenpunkte Punkte eines dreidimensionalen kartesischen Koordinatensystems sind, dass wenigstens ein zweites Auswahlfenster vorhanden ist und dass senkrechte Stützvektoren der Ebenen, welche durch das erste Auswahlfenster und das zweite Auswahlfenster aufgespannt werden, linear unabhängig sind. Diese Ausgestaltung eignet sich hervorragend zum Auffinden von Informationselementen in ausgedehnten dreidimensionalen Objekten, wie z. B. einer Druckmaschine, da hier zusätzlich ein zweites Auswahlfenster vorhanden ist, welches sich z. B. über die Ebene erstreckt, die mit der Draufsicht von oben auf eine Druckmaschine übereinstimmt. Die andere Ebene mit dem ersten Auswahlfenster befindet sich dann in einer Seitenansicht, wodurch Informationselemente mit ihren zugeordneten dreidimensionalen Koordinatenpunkten in einem kartesischen Koordinatensystem in der Seitenansicht mit dem ersten Auswahlfenster bezüglich Breite und Höhe einer Druckmaschine ausgewählt werden können, während durch das zweite Auswahlfenster in der Draufsicht zusätzlich noch die Tiefe der Maschine angewählt werden kann. Durch die Auswahl des ersten Auswahlfensters und die Auswahl des zweiten Auswahlfensters ergibt sich eine dreidimensionale Schnittmenge der beiden Auswahlfenster, welche dann als gesamt ausgewählte Teilmenge von Informationspunkte in einer Liste oder einer ähnlichen Anzeigeform auf der graphischen Benutzeroberfläche dem Benutzer angezeigt wird. Um eine solche Auswahl mittels zweier Auswahlfenster treffen zu können, ist es natürlich wichtig, dass diese Auswahlfenster nicht linear abhängig voneinander sind, d. h. dass sie nicht in der gleichen bzw. parallelen Ebene liegen. Bei einem dreidimensionalen kartesischen Koordinatensystem ist es daher zweckmäßig, dass die von den Auswahlfenstern aufgespannten Ebenen senkrecht aufeinander stehen.

In einer weiteren vorteilhaften Ausgestaltung der Erfindung ist vorgesehen, dass ein erstes Informationselement weitere Informationselemente umfasst, deren Koordinatenpunkte innerhalb der mehrdimensionalen Ausdehnung des ersten Informationselements liegen und dass beim Darstellen des ersten Informationselements auf der Anzeigevorrichtung ein Verweis auf die weiteren Informationselemente vorhanden ist. Hat der Benutzer oder Bediener mittels dem wenigstens einen Auswahlfenster eine Teilmenge von Informationselementen ausgewählt, so werden in einem ersten Schritt die größtmöglichen Informationselemente, welche wenigstens einen Koordinatenpunkt in der ausgewählten Teilmenge aufweisen, angezeigt. D. h. wenn das Objekt eine Druckmaschine ist, bei welcher der Benutzer in der Seitenansicht ein Druckwerk ausgewählt hat, so werden in einem ersten Schritt die Informationselemente Druckzylinder, Feuchtwerk, Farbwerk und Zylinderwaschanlage angezeigt. Diese Teilgruppen eines Druckwerks weisen selbstverständlich noch weitere Details auf, wobei die Details als Verweise von den aufgezählten Gruppen dargestellt werden. D. h. das Informationselement Farbwerk umfasst alle weiteren ihm zugehörigen Informationselemente wie z. B. die Farbwerkswalzen, welche sich als einzelne Details hinter dem Informationselement Farbwerk verbergen. Zweckmäßiger Weise wird das Informationselement Farbwerk als Kopf einer Baumstruktur dargestellt, welche sich von links nach rechts in die einzelnen Farbwerkskomponenten wie z. B. Farbwerkswalzen verzweigt. Dem Benutzer wird so das Auffinden und die Auswahl einzelner Informationselemente erleichtert, da er zunächst eine übersichtliche und begrenzte Anzahl von Informationselementen eines Oberbegriffs angezeigt bekommt, aber gleichzeitig ein Hinweis darauf erhält, dass dieses Informationselement noch weitere detailliertere Informationselemente enthält.

In einer weiteren Ausgestaltung der Erfindung ist vorgesehen, dass ein Informationselement wenigstens einen Verweis auf eine Zeichnung oder eine schriftliche Bezeichnung oder eine Animation enthält. Jedes einzelne Informationselement kann auf diese Art und Weise Zusatzinformationen anzeigen, welche über mögliche weitere detailliertere Informationselemente hinausgehen. So kann der eben erwähnte Oberbegriff Farbwerk als Informationselement z. B. auf eine detaillierte Zeichnung eines Farbwerks einer Druckmaschine verweisen, wobei die Zeichnung z. B. durch einen Doppelklick auf den Begriff Farbwerk auf der graphischen Benutzeroberfläche ausgewählt werden kann. Die noch detaillierteren weiteren Informationselemente eines Farbwerks wie z. B. die Farbwalzen enthalten dann z. B. nur die dazugehörige Darstellung einer Farbwalze. Es ist aber auch möglich, dass auch hier das komplette Farbwerk angezeigt wird, wobei die ausgewählte Farbwalze farblich z. B. in Rot hervorgehoben wird. Auf diese Art und Weise weiß der Benutzer genau, in welchem Kontext sich die Farbwalze in der Druckmaschine befindet. Bei Informationselementen komplexeren Inhalt ist es zusätzlich möglich, den Verweis auf eine Animation einzufügen, wodurch man nicht wie bei einer Zeichnung eine statische Ansicht eines Informationselementes erhält, sondern z. B. eine Rotation eines Informationselements, so dass man sich das ausgewählte Informationselement von allen Seiten betrachten kann. Wird z. B. der Begriff Farbwerk ausgewählt und auf der graphischen Benutzeroberfläche auf den Begriff mit einem Doppelklick geklickt, so beginnt sich das Farbwerk in einer Animation um sich selbst zu drehen, wodurch das Farbwerk von allen Seiten zu betrachten ist. Im Bereich Wartung ist es auch sinnvoll, wenn ein kleiner Film als Verweis an ein zu wartendes Informationselement angefügt ist, in dem die Wartung dem Benutzer ausführlich und nachvollziehbar erklärt wird.

In einer weiteren Ausgestaltung der Erfindung ist vorgesehen, dass die Informationselemente in wenigstens zwei Teilmengen, insbesondere Informationstypen, untergliedert sind, dass der Informationstyp auf der graphischen Benutzeroberfläche auswählbar ist und dass bei Auswahl eines Informationstyp die dazu passende Teilmenge eines ausgewählten Informationselements darstellbar ist. Diese Ausgestaltung bietet den großen Vorteil, dass mittels eines weiteren Auswahlkriteriurns, dem Informationstyp, die Anzeige der mit dem oder den Auswahlfenstern ausgewählten Informationselemente weiter eingegrenzt werden kann. Die Informationstypen sind als wählbare Funktionsfelder auf der graphischen Benutzeroberfläche dargestellt, so dass sie vom Benutzer durch einen Klick mit einem Eingabegerät wie z.B. einer Computer-Mouse oder einem Trackball ausgewählt werden können. Handelt es sich bei dem zu behandelnden Objekt um eine Druckmaschine, so kann z.B. der Informationstyp Wartung eingegeben werden. Mit der Auswahl des Begriffes Wartung wird sichergestellt, dass nach der Auswahl der Informationselemente mittels den oder dem Auswahlfenster, nur die Informationselemente angezeigt werden, welche überhaupt zu warten sind. Hat der Benutzer z. B. ein Druckwerk ausgewählt, so werden nicht alle Informationselemente, welche in einem Druckwerk vorhanden sind angezeigt, sondern z. B. nur die Lager der einzelnen Zylinder, da nur diese zu warten sind. Weitere mögliche Auswahlbegriffe bei Informationstypen einer Druckmaschine sind z. B. Bedienung, elektrische Komponenten usw. Es ist auch möglich so vorzugehen, dass erst ein Informationselement oder eine Menge von Informationselementen ausgewählt wird und dann ein Informationstyp gewählt wird, so dass der Benutzer für ausgewählte Informationselemente zwischen den Informationstypen hin- und herspringen kann, z.B. wenn er für ein Informationselement zunächst technische Daten abrufen möchte und danach noch Wartungshinweise erhalten möchte.

Eine weitere Ausgestaltung der vorliegenden Erfindung bietet einen ähnlichen Vorteil wie die zuvor genannte Ausgestaltung, dadurch dass wenigstens ein Eingabefeld auf der graphischen Benutzeroberfläche der Anzeigevorrichtung vorgesehen ist, in welches beliebige Suchbegriffe eingebbar sind und dass auf der graphischen Benutzeroberfläche eine Trefferliste mit den in den Informationselementen oder den dazugehörigen Verweisen auf eine Zeichnung, eine schriftliche Bezeichnung, einen Text oder eine graphische Animation gefundenen Suchbegriffen darstellbar ist. Während bei der zuvor genannten Ausgestaltung der Erfindung einzelne Informationstypen mittels vom Benutzer nicht veränderbarer Funktionsfelder auf der graphischen Benutzeroberfläche auswählbar sind, hat hier der Benutzer die freie Wahl, beliebige Begriffe alphanumerisch in eine Texteingabemaske auf der graphischen Benutzeroberfläche einzugeben und diese in den der Vorrichtung zugrunde liegenden Informationsmaterialien zu suchen und auf der graphischen Benutzeroberfläche anzeigen zu lassen. Hat hier der Benutzer z. B. ein bestimmtes Druckwerk einer Druckmaschine mit einem Auswahlfenster ausgewählt und den Begriff Zylinder eingegeben, so erhält er eine Liste mit allen Zylindern, welche in dem ausgewählten Druckwerk vorhanden sind. Dies bietet mehr Freiheit bei der Auswahl als die vorgegebenen Funktionsfelder mit vorgegebenen Informationstypen. Allerdings ist diese Ausgestaltung nur sinnvoll, wenn die Vorrichtung eine Volltextsuche in sämtlichen der Vorrichtung zugrunde liegenden Daten in den Verweisen der Informationselemente ermöglicht.

Die vorliegende Erfindung eignet sich besonders dazu, die Bedienung und Wartung in komplexen Maschinen zu erleichtern sowie Ersatzteile zu identifizieren, da hier sowohl einzelne Bauteile einer Maschine als auch gesamte Bauteilgruppen einfach visuell ausgewählt werden können. Aus diesem Grund eignet sich die Vorrichtung und das zugehörige Verfahren auch besonders dazu, die Bedienung und Wartung einer papierverarbeitenden Maschine, insbesondere einer Druckmaschine oder Falzmaschine zu erleichtern.

In einer weiteren Ausgestaltung der Erfindung ist vorgesehen, dass über eine Auswahleinrichtung oder ein Eingabefeld auf der graphischen Benutzeroberfläche eine bestimmte Variante einer Maschine oder ein bestimmtes Gerät auswählbar ist, und das nur die in der Speichervorrichtung abgespeicherten Informationselemente, welche zu der ausgewählten Maschinenvariante oder dem ausgewählten Gerät gehören, auf der graphischen Benutzeroberfläche darstellbar sind. Besitzt ein Benutzer oder Bediener mehrere Maschinen, z. B. mehrere Typen von Druckmaschinen, so kann er auf der Benutzeroberfläche den jeweiligen Typ der Maschine auswählen und bekommt dann nur die Informationselemente angezeigt, welche in dem Maschinentyp auch tatsächlich vorhanden sind. Dabei kann der Benutzer gestuft vorgehen, indem er zunächst eine ganze Maschinenbaureihe und dann ein bestimmtes Modell dieser Baureihe auswählt. Dies kann auch vom Hersteller der Druckmaschine schon in Vorauswahl geschehen, so dass er eine Vorrichtung schaffen kann, mit welcher grundsätzlich alle vom Hersteller produzierten Maschinentypen darstellbar sind, aber in Abhängigkeit der Ausstattung der jeweiligen ausgelieferten Maschine nur die für diese Maschinevariante relevanten Informationselemente ausgewählt und dargestellt werden können, während dagegen die nicht vorhandenen Informationselemente für den Benutzer unsichtbar bleiben.

Ein Ausführungsbeispiel einer erfindungsgemäßen Vorrichtung und eines erfindungsgemäßen Verfahrens wird anhand der nachfolgenden Zeichnungen näher erläutert und beschrieben.

Es zeigen:
- Fig. 1a:: eine Matrix aus Informationstypen und Informationselementen als Ausschnitt aus Fig. 1c,
- Fig. 1b:: einen Ausschnitt aus einer graphischen Benutzeroberfläche einer erfindungsgemäßen Vorrichtung als weiterer Ausschnitt aus Fig. 1c,
- Fig. 1c:: Zum einen rechts oben einen Ausschnitt aus einer graphischen Benutzeroberfläche einer erfindungsgemäßen Vorrichtung und zum anderen links eine Matrix aus Informationstypen und Informationselementen in der Übersicht,
- Fig. 2a:: Eine Ansicht einer graphischen Benutzeroberfläche einer erfindungsgemäßen Vorrichtung nach erfolgter Auswahl mittels Auswahlfenster,
- Fig. 2b:: Eine Ansicht aller in Fig. 2a ausgewählten Informationselemente sowie eine Zeichnung eines ausgewählten Informationselements,
- Fig. 2c:: Eine Ansicht eines Eingabefelds für Informationstypen sowie ein angezeigtes Suchergebnis,
- Fig. 2d:: Resultat der mittels der Fenster ausgewählten Informationselemente nach Eingabe eines Informationstyps,
- Fig. 3:: Eine weitere Matrix aus Informationselementen und Informationstypen sowie einem Dokument, welchem die Informationselemente entnommen werden,
- Fig. 4a:: Ein Flussdiagramm eines erfindungsgemäßen Verfahrens mit beispielhaften Auswahlereignissen,
- Fig. 4b: Auswahlereignis Auswahl Maschinentyp
- Fig. 4c: Anzeige eines ausgewählten Maschinentyps auf der graphischen Benutzeroberfläche,
- Fig. 4d: Anzeige aller Informationselemente,
- Fig. 4e: Anzeige ausgewählter Informationselemente,
- Fig. 4f: Eingabemaske für Zeichenketten,
- Fig. 4g: Anzeige von einem Suchergebnis entsprechenden Dokumenten,
- Fig. 4h: Umschaltleiste für verschiedene Informationstypen,
- Fig. 4i: Anzeige eines Dokuments,
- Fig. 5a:: Eine Seitenansicht eines Steuerpults einer Druckmaschine, welches mit der erfindungsgemäßen Vorrichtung ausgerüstet ist und
- Fig. 5b:: Eine Vorderansicht eines Steuerpults gemäß Fig. 5a.

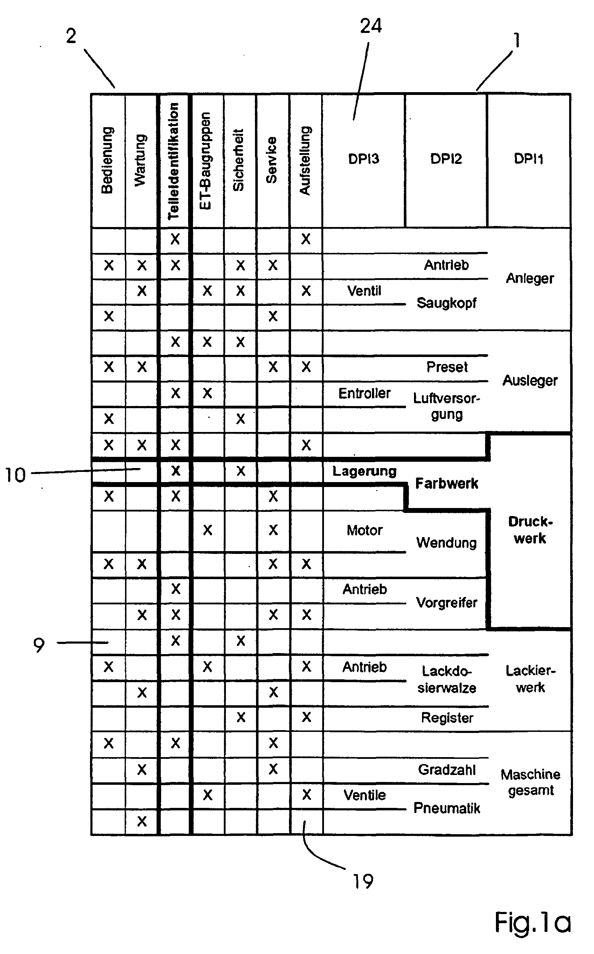

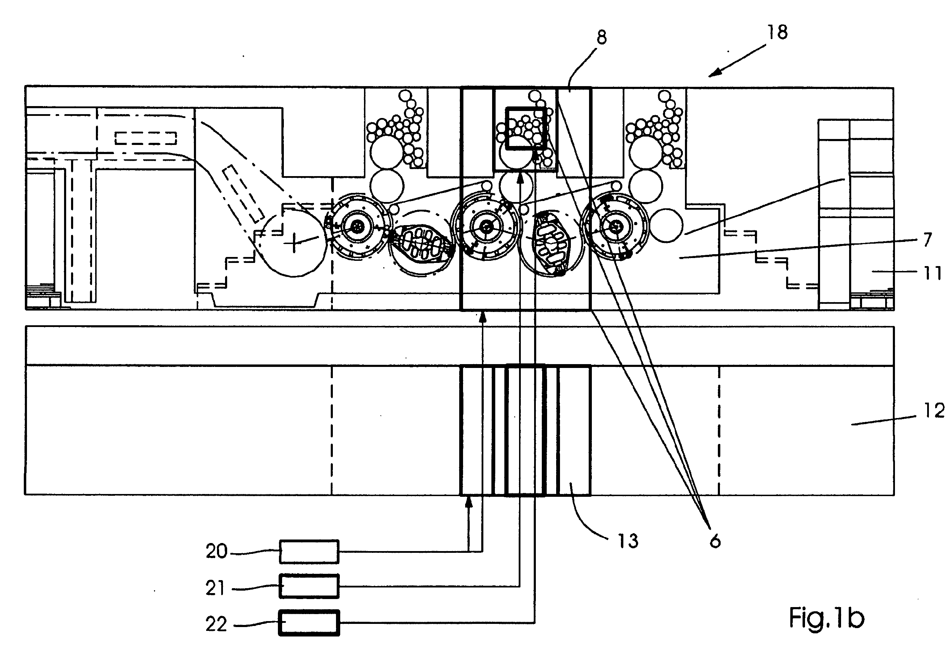

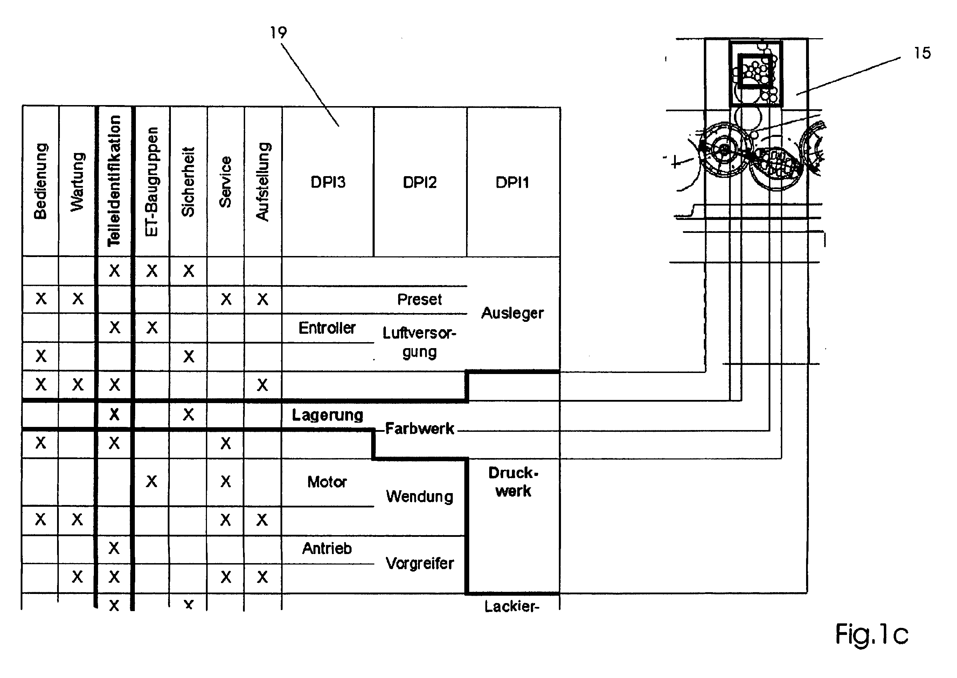

Als Ausführungsbeispiel wird nachfolgend eine erfindungsgemäße Vorrichtung für eine Druckmaschine 7 als Objekt 7 dargestellt. Zur besseren Übersicht sind in Fig. 1c sowohl ein Ausschnitt aus einer graphischen Benutzeroberfläche 18 einer erfindungsgemäßen Vorrichtung dargestellt als auch ein Ausschnitt aus einer matrixartigen Tabelle 19 aus Informationstypen 2 und Informationselementen 1. Die graphische Benutzeroberfläche 18 ist auch in Fig. 1b vergrößert dargestellt, während Fig. 1a die matrixartige Tabelle 19 vergrößert zeigt. Mittels der graumarkierten Flächen 20, 21, 22 wird in den Fig. 1a, 1b, 1c die visuelle Verbindung zwischen der graphischen Benutzeroberfläche 18 und der matrixartigen Tabelle 19 hergestellt, so dass ein Auswahlvorgang auf der graphischen Benutzeroberfläche 18 in Verbindung mit den in einer Speichervorrichtung abgespeicherten Informationselemente 1 verständlich ist. Bei der Speichervorrichtung handelt es sich zweckmäßiger Weise um den Festplattenspeicher eines PCs oder Laptops, welche neben dem Festplattenspeicher üblicherweise noch flüchtigen Speicher (RAM) einen Hauptprozessor und die üblichen Computer-Schnittstellen aufweisen. PC und Laptop sind hierbei jedoch nur als Beispiel genannt und können in Zukunft durch leistungsfähige Kleincomputer wie PDAs und ähnliche Geräte mit Anzeigedisplays und Speicherbausteinen ersetzt werden.

Ein in der Speichervorrichtung abgespeichertes Informationselement 1 wird in der matrixartigen Tabelle 19 in den Fig. 1 a durch ein Kreuz dargestellt, wobei die Informationselemente 1 zeilenweise und die Informationstypen 2 spaltenweise dargestellt sind. Die Informationselemente 1 gliedern sich dabei in drei Ebenen 24, welche von rechts nach links detaillierter werden, d. h. rechts befindet sich zum Beispiel der Oberbegriff "Anleger", welcher sich in die weiteren Informationselemente "Antrieb" und "Saugkopf" untergliedert, wobei der "Saugkopf' ein "Ventil" als kleinstes Informationselement 1 aufweist. Mit den Kreuzen in der Matrix wird dann aufgezeigt, ob das jeweilige Informationselement 1 bei der Auswahl eines bestimmten Informationstyps 2 vorhanden ist. Die unterschiedlichen Ebenen werden in Fig. 1a mit DPI1, DPI2 und DPI3 bezeichnet, wobei DPI für "Document related Product Index" steht. Dies stellt also die verschieden Ebenen eines Produktes, hier einer Druckmaschine 7, dar.

Beispielhaft wird hier als Informationstyp 2 in der grau unterlegten Spalte der Informationstyp "Teileidentifikation" ausgewählt, d. h. es werden alle Informationselemente 1, welche irgendwelche Bauteile oder Baugruppen der Druckmaschine 7 bezeichnen und welche mittels der graphischen Benutzeroberfläche 18 ausgewählt wurden, angezeigt. Mittels der graphischen Benutzeroberfläche 18 können nun verschiedene Ausschnitte aus der matrixartigen Tabelle 19 in Fig. 1a ausgewählt werden. Dazu weist die graphische Benutzeroberfläche 18 in Fig. 1b zwei rechteckförmige Auswahlfenster 6, 13 auf, wobei das erste Auswahlfenster 6 über die gesamte Seitenansicht eines darzustellenden Objektes 7, hier einer Druckmaschine 7, bewegt werden kann, während das zweite Auswahlfenster 13 über die gesamte Draufsicht 12 von oben bewegt werden kann.

Durch die verschieden groß dargestellten Auswahlfenster 6 wird aufgezeigt, dass das Auswahlfenster 6 genauso wie das Auswahlfenster 13 in seiner Größe veränderbar ist. Neben der hier gezeigten rechteckigen Form als Auswahlfenster sind auch ovale, rautenförmige, quadratische oder andersgeartete Auswahlfenster 6, 13 denkbar. Das größte dargestellte mittelgrau unterlegte Auswahlfenster 6 umfasst dabei das komplette Druckwerk 8 einer Druckmaschine 7, während das kleinste hellgrau unterlegte Auswahlfenster 6 nur einen kleinen Teilbereich eines Druckwerks 8 der Druckmaschine 7 auswählt. Mittels der Verbindungsflächen 20, 21, 22 ist zu erkennen, wie in Abhängigkeit der Größe der Auswahlfenster 6 und 13 die ausgewählten Mengen an Informationselementen 1 in der matrixartigen Tabelle 19 in Fig. 1a vorgenommen wird. Das größte Auswahlfenster 6 korrespondiert dabei mit der mittelgrauen Fläche 20, wodurch in der Tabelle 19 sämtliche Informationselemente 1 eines Druckwerks 8 ausgewählt werden. Das mittelgroße Auswahlfenster 6 korrespondiert dabei mit der dunkelgrauen Fläche 21 wodurch die Informationselemente 1, welche zum Farbwerk des Druckwerks 8 gehören, ausgewählt werden. Das kleinste der Auswahlfenster 6 ist der hellgrauen Fläche 22 zugeordnet, mit welcher eine Lagerung eines Farbwerks in dem Druckwerk 8 der Druckmaschine 7 ausgewählt wird. Der mit der dunkelgrauen 21 und mittelgrauen Fläche 20 ausgewählte Teil der Informationselemente 1 wird dabei als ausgewählte Informationselementen 9 bezeichnet, während ein einzelnes ausgewähltes Informationselement 10 gleichzeitig den höchsten Detaillierungsgrad darstellt.

Da ein Druckwerk 8 einer Druckmaschine 7 eine dreidimensionale Ausdehnung zwischen der sogenannten Antriebsseite AS und Bedienseite BS aufweist, kann mittels des zweiten Auswahlfensters 13 eine schärfere Auswahl an Informationselementen 1 getroffen werden, wenn das Auswahlfenster 13 sich nicht über die gesamte Breite der von oben 12 gesehenen Druckmaschine 7 erstreckt. In dem Ausführungsbeispiel gemäß der Figur 1a, 1b, 1c sind die Auswahlfenster 6, 13 so miteinander gekoppelt, dass ihre Breite immer gleich ist, während sie in der Höhe unabhängig voneinander veränderbar sind. Dies muss nicht zwangsläufig so sein, ist aber sinnvoll, da aus der matrixartigen Tabelle 19 immer die Schnittmenge der mit den beiden Auswahlfenstern 6, 13 ausgewählten Informationselementen 1 selektiert wird. Würde sich das Auswahlfenster 13 komplett rechts oder links vom Auswahlfenster 6 befinden, so würde automatisch eine leere Schnittmenge entstehen und es würden keine Informationselemente 1 ausgewählt. Dies erscheint jedoch nicht sinnvoll. Deshalb wird unabhängig davon, welches Auswahlfenster 6, 13 in seiner Breite verändert wird, das jeweils andere Auswahlfenster 6, 13 entsprechend angepasst. Die Anpassung der Auswahlfenster 6, 13 sowie die dadurch erzeugte Auswahl der Informationselemente 1 aus der matrixartigen Tabelle 19 in der Speicher Vorrichtung wird mittels des erwähnten PC oder Laptop und der darin enthaltenden Rechenvorrichtungen getroffen. Zusätzlich können die Auswahlfenster 6, 13 noch mit einer Zoom-Funktion ausgerüstet sein, so dass einzelne Ausschnitte der Druckmaschine 7 oder die Maschine 7 als Ganzes vergrößert werden können. Selbstverständlich kann eine solche Zoom-Funktion aber auch getrennt von den Auswahlfenstern 6, 13 z.B. mittels einer separaten Lupenfunktion verwirklicht werden.

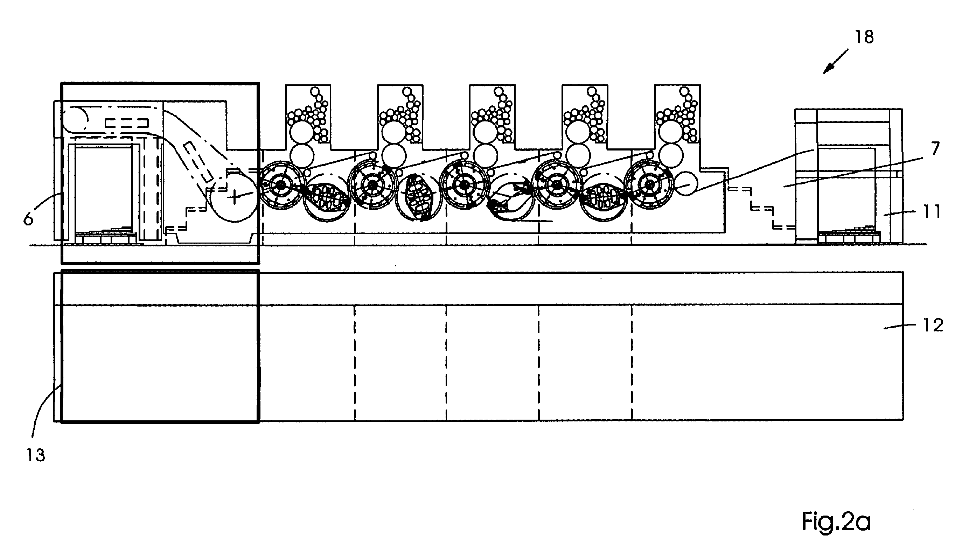

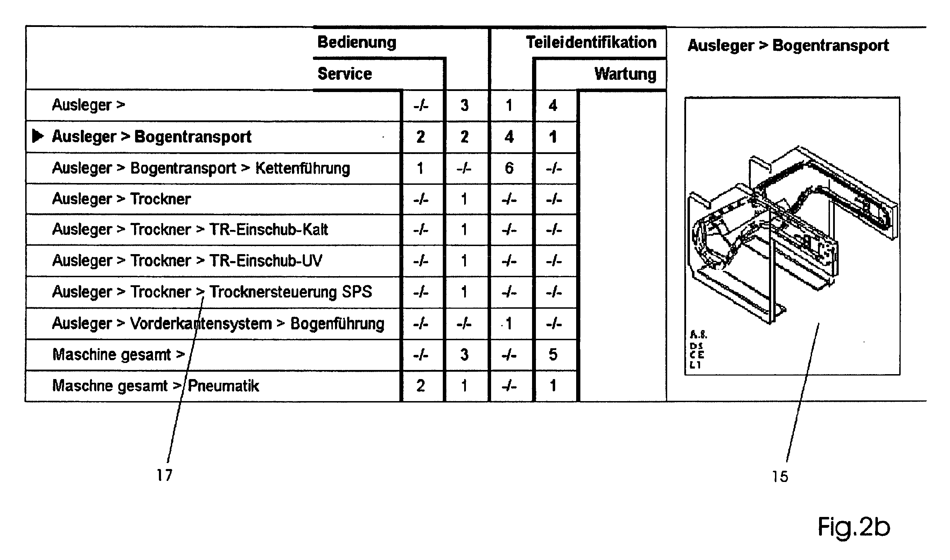

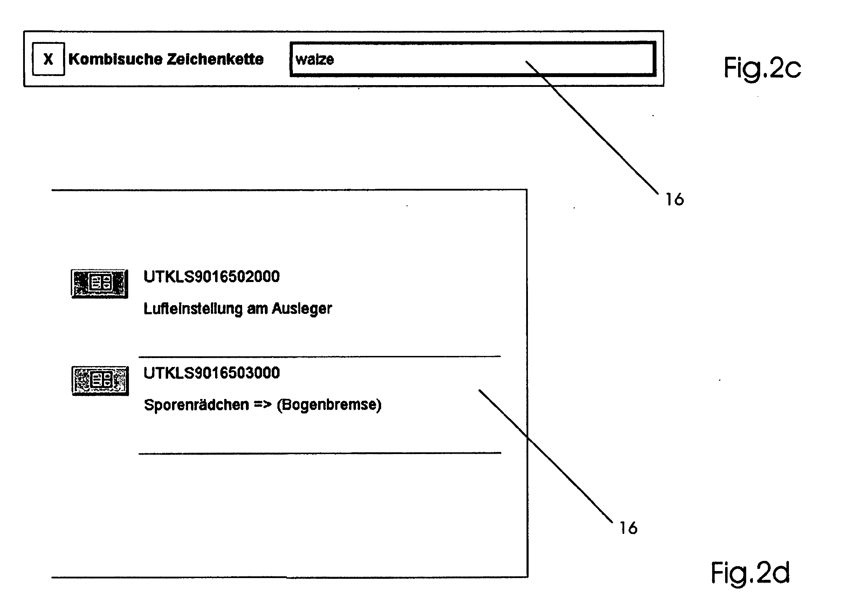

In Fig. 2a ist eine graphische Benutzeroberfläche 18 dargestellt, nachdem eine Menge an Informationselementen 1 mittels der Auswahlfenster 6, 13 aus der Seitenansicht 11 und der Draufsicht 12 auf eine Druckmaschine 7 ausgewählt worden ist. Die Abkürzung AS und BS stehen dabei für Antriebsseite und Benutzerseite einer Druckmaschine 7. In Fig. 2b ist das Ergebnis der Auswahl an Informationselementen 1 dargestellt. Die Darstellung erfolgt hier in einer Tabelle 17. Von links nach rechts und von oben nach unten werden dabei die ausgewählten Informationselemente 1 hierarchisch dargestellt, so dass oben links das größte ausgewählte Informationselement 1, hier der Ausleger einer Druckmaschine 7, aufgeführt ist und dann untereinander in alphabetischer Reihenfolge weitere Unterkomponenten an Informationselementen 1 des Auslegers angeordnet sind, wobei auch diese Unterkomponenten nichts weiter als Informationselemente 1 sind und über weitere Informationselemente 1 verfügen können. Mittels eines beweglichen Pfeils wurde in Figur 2b vom Benutzer die Unterkomponente "Bogentransport" am Ausleger ausgewählt, so dass das entsprechende Informationselement 1 "Bogentransport" neben der Tabelle 17 dargestellt wird. Diese Darstellung erfolgt hier in Form einer Zeichnung 15, welche einen Teil des Auslegers einer Druckmaschine 7 zeigt, wobei die vom Benutzer ausgewählte Unterkomponente "Bogentransport" mit den dazugehörigen Informationselementen 1 in der Zeichnung 15 dunkelgrau hervorgehoben ist. Des weiteren hat der Benutzer hier in Fig. 2c den Informationstyp 2 "Bedienung" über ein Eingabefeld 14 ausgewählt, so dass wie in Fig. 2d gezeigt alle weiteren Informationselemente 1 aufgeführt sind, welche das Informationselement "Bogentransport" in Verbindung mit dem Informationstyp 2 "Bedienung" aufweisen. Diese sind hier die beiden Informationselemente 1 "Lufteinstellung am Ausleger" und "Sporenrädchen". Diese werden in Fig. 2d im grau unterlegten Bereich 16 als detaillierte Ergebnisse des Auswahlvorgangs angezeigt. Dadurch wird das gezielte Auffinden der Lösungsmenge bei geringem Interaktionsaufwand ermöglicht.

Der Auswahlvorgang in den Fig. 2a, 2b, 2c setzt sich also aus dem visuellen Auswahlvorgang mittels der Auswahlfenster 6, 13 zusammen und einer Textauswahl anhand der mit den Auswahlfenstern 6, 13 ausgewählten Informationselemente 1, welche in einer Tabelle 17 dargestellt sind, zusammen. Es handelt sich hierbei um eine kombinierte visuelle und textliche Suche. Dies ermöglicht dem Bediener und Benutzer die individuelle Abstimmung seiner Suchoperation auf seinen Kenntnisstand der Druckmaschine 7. Je weniger er mit der Terminologie der Druckmaschine 7 vertraut ist, desto mehr wird sich der Benutzer rein visuell mittels der Auswahlfenster 6, 13 orientieren und damit die Auswahl möglichst präzise eingrenzen, während ein erfahrener Benutzer die Auswahlfenster 6, 13 möglichst groß wählen wird und sich anhand der ausgewählten Informationselemente 1 in der Tabelle 17 in Verbindung mit dem Eingabefeld 14 weiter zu den gewünschten Informationselementen 1 orientieren wird. Fig. 2d zeigt die ausgewählten Komponenten zu dem gewählten Informationstyp 2 und der mittels der Auswahlfenster 6, 13 ausgewählten Informationselemente 1.

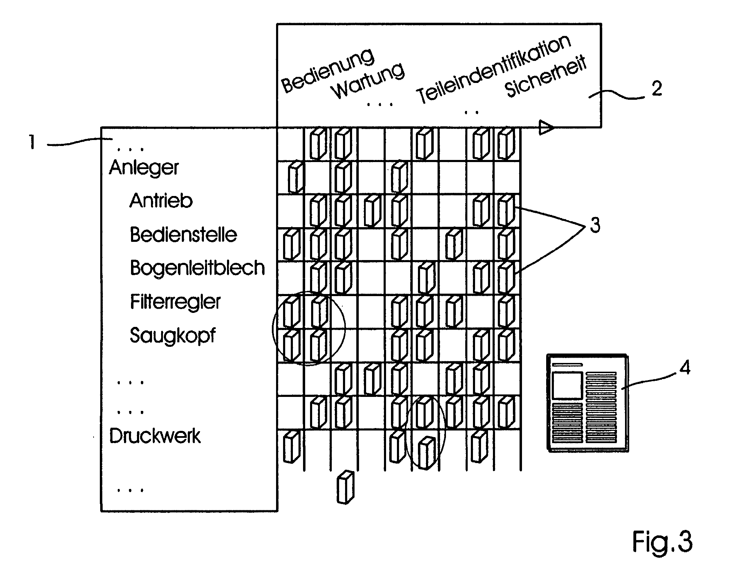

Aus Fig. 3 geht hervor, wie aus einem herkömmlichen Dokumentationselement 4 einer Druckmaschine 7 eine erfindungsgemäße Vorrichtung wird. Bei dem Dokument 4 kann es sich um eine Betriebsanleitung aus Papier handeln, es kann aber auch ein elektronisches Dokument, z. B. ein Dokument im bekannten Datenformat PDF sein. Dieses Dokument 4 wird von einem technischen Redakteur manuell oder bei elektronischen Dokumenten mit Computerunterstützung nach allen vorkommenden Bauteilen einer Druckmaschine 7 untersucht, anschließend werden die einzelnen Bauteile als sogenannte kleinste vorkommende Informationseinheiten 3 in einer Tabelle den Informationselementen 1 und den Informationstypen 2 zugeordnet. Dabei gibt es Informationselemente 1 die aus einer kleinsten Informationseinheit 3 bestehen, es gibt aber auch Informationselemente 1, die aus mehreren kleinsten Informationseinheiten 3 bestehen, welche dadurch wiederum gleichzeitig weitere Informationselemente 1 enthalten können aber nicht müssen.

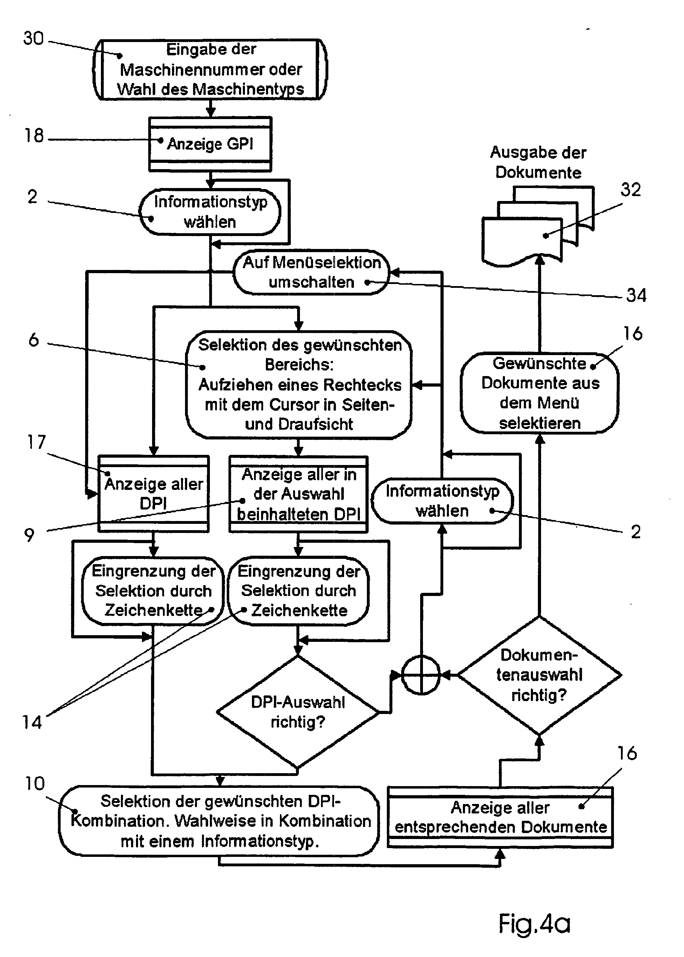

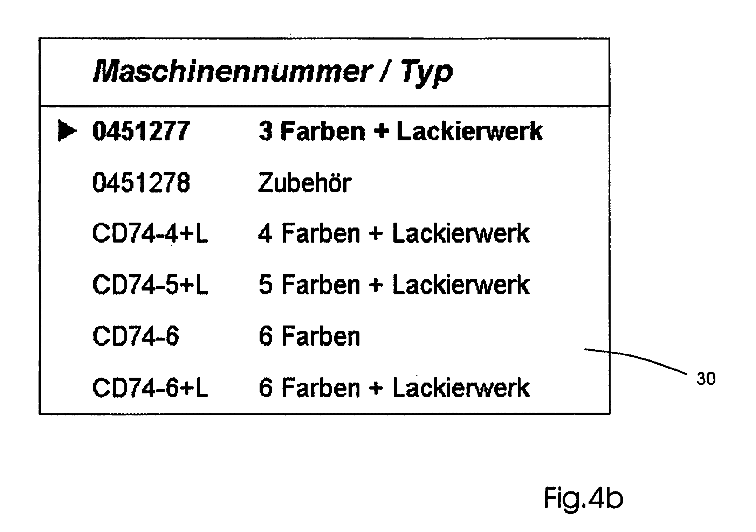

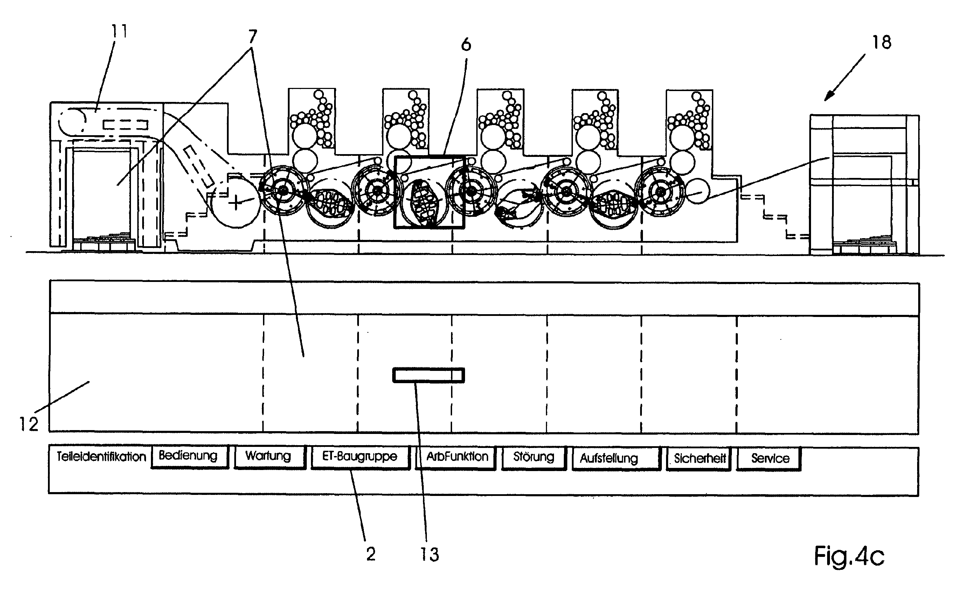

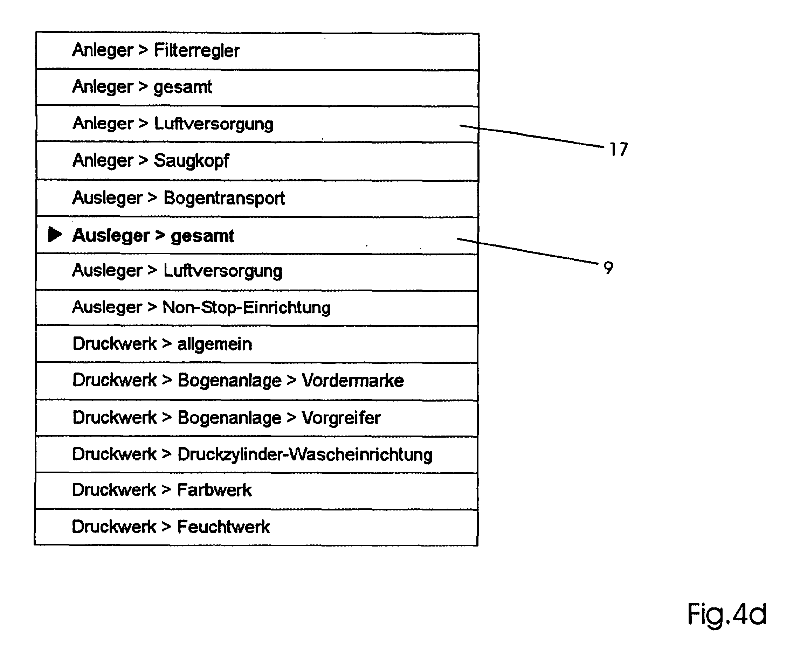

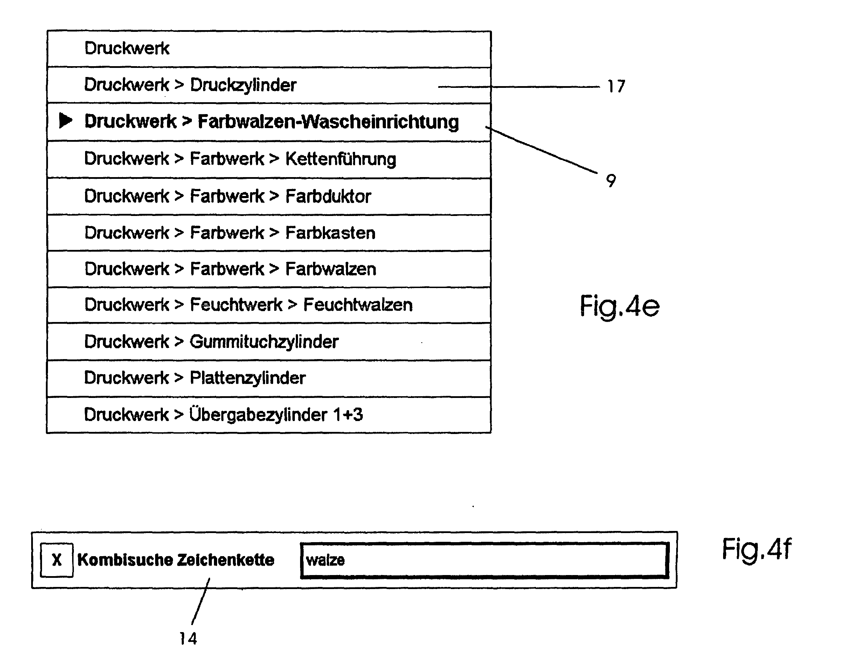

Das Flussdiagramm in Fig. 4a zeigt den Ablauf von Auswahlvorgängen beim Auffinden von Informationselementen 1. Die weiteren Fig. 4b bis Fig. 4i zeigen einzelne Ereignisse aus Prozessen, welche in dem Flussdiagramm in Fig. 4a auftreten. Es handelt sich dabei um eine Ausgestaltung der erfindungsgemäße Vorrichtung, bei welcher aus mehreren Druckmaschinen 7 ausgewählt werden kann. Eine solche Ausgestaltung ist daher nicht an eine bestimmte Druckmaschine gebunden und kann daher sinnvoller Weise auch auf einem von einer Druckmaschine separat stehenden PC oder Laptop verwirklicht sein. Deshalb ist in Fig. 4a zu oberst die Eingabe einer bestimmten Maschinennummer oder eines bestimmten Maschinentyps vorgesehen, welche beispielhaft in Fig. 4b in Kasten 30 gezeigt sind. Nach Auswahl der Maschine wird die entsprechende Maschine 7 gemäß Fig. 4c graphisch angezeigt, wobei sowohl eine Seitenansicht 11 als auch eine Draufsicht von oben 12 angezeigt wird. Die graphische Darstellung der Druckmaschine 7 in Figur 4c wird dabei als GPI bezeichnet, was "Graphical Product Index" bedeutet. Als nächstes kann dann ein sogenannter Informationstyp 2 ausgewählt werden, d. h. es wird ausgewählt, ob Informationen zur Wartung, Bedienung, den Bauteilen selbst, bestimmten Funktionen, Störungsmeldungen, Sicherheit, Serviceinformationen etc. gewünscht werden. Diese Eingabe kann aber auch entfallen, da sie noch zu einem späteren Zeitpunkt möglich ist. Nach dem diese Auswahl hier mittels der Auswahlfelder getroffen ist, wird mittels der Auswahlfenster 6, 13 der gewünschte Bereich auf der angezeigten Druckmaschine 7 visuell ausgewählt, und es werden die ausgewählten Informationselemente einzeln mittels einer Anzeigetafel 17 aus Fig. 4e angezeigt. Wenn mittels der Auswahlfenster 6, 13 keine Selektion stattgefunden hat, werden alle Informationselemente der Druckmaschine 7 in der Anzeigetafel 17 gemäß Fig. 4d angezeigt. Falls die durch die Auswahlfenster ausgewählten Informationselemente 1 noch eine zu große Auswahl beinhalten, können die Informationselemente 1 mittels einer Textsuche in einem Eingabefenster 14 wie in Fig. 4f zu sehen weiter eingegrenzt werden. Dabei wird in das Eingabefenster 14 eine beliebige Zeichenkette eingegeben, welche dann als weiteres Auswahlkriterium dient.

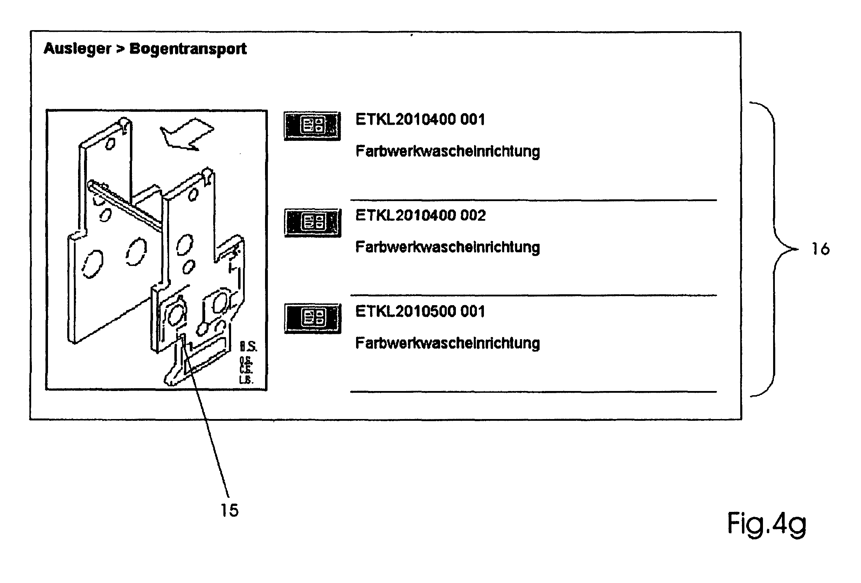

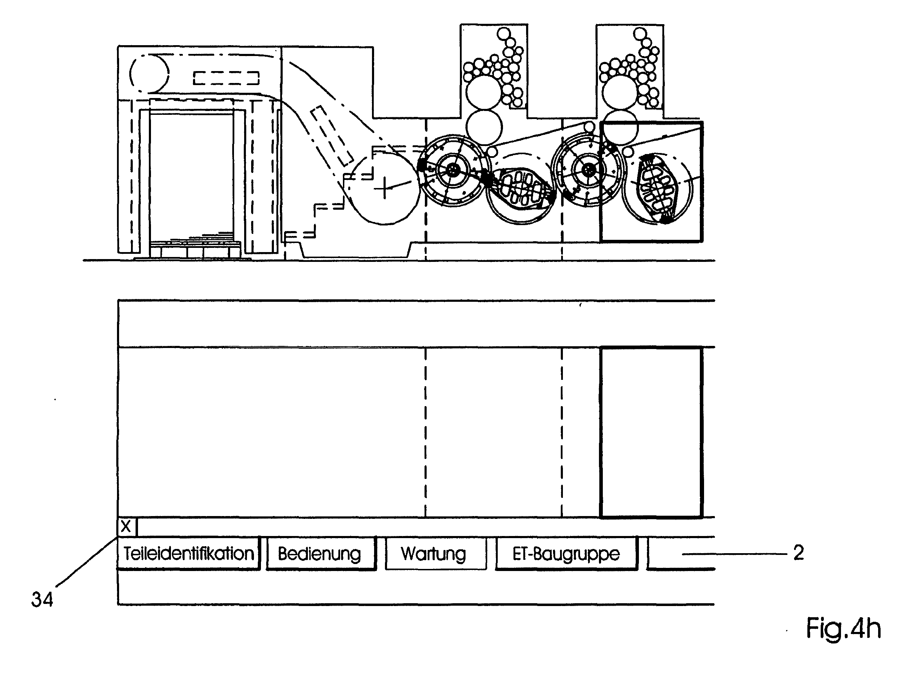

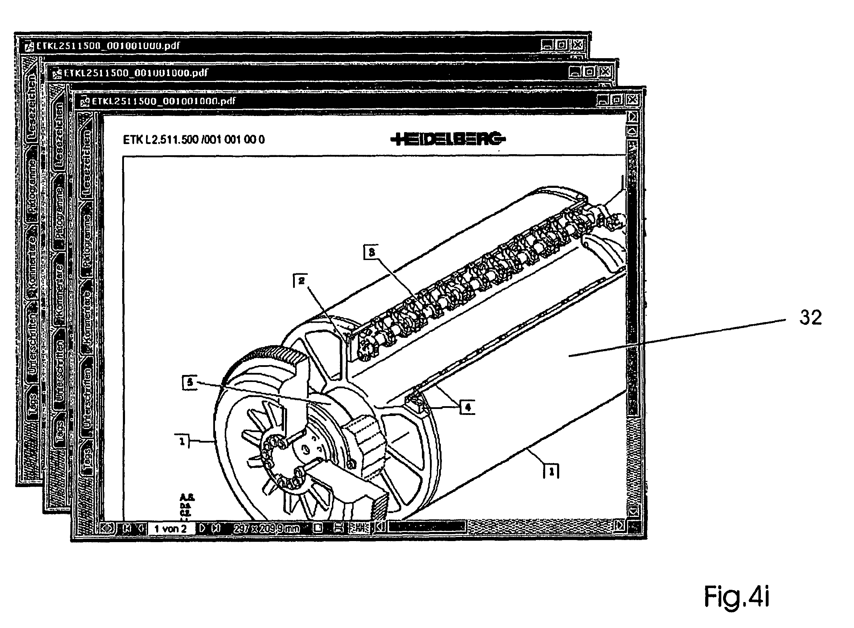

Ist die gewünschte Auswahl an Informationselementen 1 erreicht, so können aus der Tabelle 17 die entsprechenden Dokumente z.B. mittels Mouse-Klick ausgewählt werden, wodurch dann mittels z. B. einer Zeichnung 32 gemäß Fig. 4i die entsprechenden Informationen dargestellt werden. Zusätzlich kann auch jetzt noch ein Informationstyp 2 ausgewählt werden, um die Auswahl zu präzisieren. Betrifft das ausgewählte Informationselement 1 z.B. ein bestimmtes Bauteil einer Druckmaschine 7, so kann auch nach erfolgter Auswahl 34 mittels der Informationstypen 2, in Figur 4a mit CIT bezeichnet, was "Customer Information Typ" bedeutet, gemäß Fig. 4h zwischen Bedienung, Teileidentifikation, Wartung usw. hin- und hergewechselt werden. Es werden dann jeweils die entsprechenden Dokumente auf der graphischen Benutzeroberfläche 18 in einem weiteren grau unterlegten Fenster 16 gemäß Fig. 4g angezeigt. Dieses Fenster enthält wie oben beschrieben immer auch eine Zeichnung 15, welche die ausgewählten Informationselemente 9 farblich hervorgehoben anzeigt.

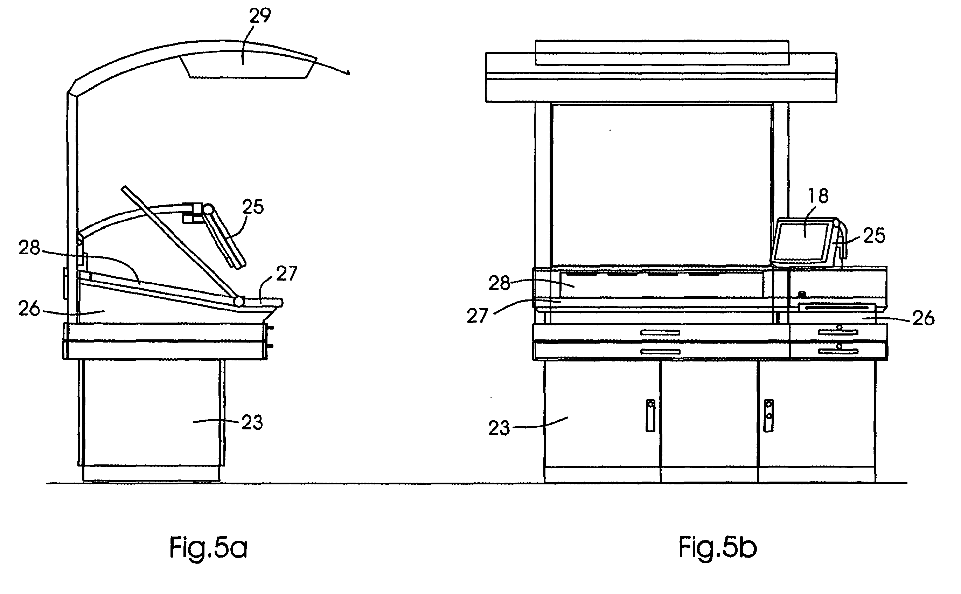

Die Fig. 5a und 5b zeigen eine erfindungsgemäße Vorrichtung zum Auffinden von Bauteilen und zur erleichternden Wartung oder Bedienung einer Druckmaschine 7, welche in den Steuerstand der Druckmaschine 7 integriert ist. Die erfindungsgemäße Vorrichtung ist hierbei auf dem bei einer Druckmaschine 7 vom Typ Speedmaster CD74 der Heidelberger Druckmaschinen AG ohnehin vorhandenen Steuerungsrechner, einem integrierten PC 26, installiert, welcher die bei dieser Druckmaschine vorhandene graphische Bedienoberfläche namens CP 2000 steuert. In diese Bedienoberfläche CP 2000 lässt sich die erfindungsgemäße Vorrichtung zum Auffinden von Informationselementen 1 leicht integrieren, da die entsprechende Hardware bei einer solchen Druckmaschine 7 ohnehin vorhanden ist. Der Drucker als Bediener und Benutzer der Maschine 7 kann dann einfach über die graphische Benutzeroberfläche der CP 2000 zusätzlich eine graphische Benutzeroberfläche 18 der erfindungsgemäßen Vorrichtung aufrufen, wenn er Hilfe beim Zurechtfinden an der Maschine 7 benötigt. Damit wird die häufig komplizierte Bedienung einer Druckmaschine 7 sehr erleichtert, ohne dass zusätzliche Geräte vorhanden sein oder installiert werden müssen. Insbesondere ist dadurch eine einfache Ausrüstung bestehender Druckmaschinen 7 mit der erfindungsgemäßen Vorrichtung möglich, da nur eine Software auf den vorhandenen integrierten PC 26 aufgespielt werden muss.

Der Steuerstand der Druckmaschine 7 weist zur Anzeige der graphischen Benutzeroberfläche 18 einen Flachbildschirm 25 auf TFT-LCD-Basis auf, welcher weitestgehend einem Computer-Monitor entspricht. Des weiteren beinhaltet der Steuerstand eine Farbzonenanzeige 27, mit welcher die Farbzonen eines auf einer Druckauflage 28 aufliegenden Drucks eingestellt werden können. Zur besseren Ausleuchtung des Drucks ist oberhalb der Druckauflage 28 eine Lampe 29 vorhanden. In der unteren Hälfte des Steuerstands befindet sich außerdem noch ein Unterschrank 23 zur Aufnahme weiterer Geräte.

### Bezugszeichenliste

- 1: Informationselement
- 2: Informationstyp
- 3: kleinste Informationseinheit
- 4: Dokument
- 6: Auswahlfenster für Seitenansicht
- 7: Druckmaschine
- 8: Druckwerk einer Druckmaschine
- 9: ausgewählte Informationselemente
- 10: ein einzelnes ausgewähltes Informationselement
- 11: Seitenansicht einer Druckmaschine
- 12: Draufsicht von oben auf eine Druckmaschine
- 13: weiteres Auswahlfenster für Draufsicht
- 14: Eingabefeld für Texteingabe oder Auswahlfelder
- 15: Zeichnung mit hervorgehobenen Informationselementen
- 16: Unterkomponenten Auswahl eines ausgewählten Informationselementes
- 17: Tabelle zur Anzeige ausgewählter Informationselemente
- 18: Graphische Benutzeroberfläche
- 19: matrixartige Tabelle
- 20: großes Auswahlfenster
- 21: mittelgroßes Auswahlfenster
- 22: kleines Auswahlfenster
- 23: Unterschrank
- 24: Auswahlebenen
- 25: Flachbildschirm
- 26: integrierter PC
- 27: Farbzonenanzeige
- 28: Druckauflage
- 29: Beleuchtung
- 30: Anzeige für Maschinentypen
- 32: Anzeige einer zu einem Informationselement gehörenden Zeichnung
- 34: erfolgte Auswahl
- AS: Antriebsseite einer Druckmaschine
- BS: Bedienerseite einer Druckmaschine

## Patentansprüche

1. Vorrichtung zum Auffinden von Informationselementen (1) in einem oder mehreren Objekten (7),
• wobei die Informationselemente (1)in einer Speichervorrichtung abspeicherbar sind,
• wobei die Objekte (7) mittels einer graphischen Benutzeroberfläche (18) auf einer Anzeigevorrichtung darstellbar sind,
**dadurch gekennzeichnet,**
• **dass** die Informationselemente (1) in einem Koordinatensystem eines graphisch dargestellten Objektes (7) angeordnet sind, so dass jedem Informationselement (1) wenigstens ein Koordinatenpunkt in dem graphisch dargestellten Objekt (7) zugeordnet ist,
• **dass** zum Auffinden des gewünschten Informationselements (10) mittels der graphischen Benutzeroberfläche (18) wenigstens ein in der Größe oder Form variables Auswahlfenster (6) vorhanden ist, mit welchem eine beliebig große Teilmenge von Koordinatenpunkten und dazugehörigen Informationselementen (1) des Objektes (7) auswählbar ist,
• und **dass** die ausgewählten Informationselemente (9, 10) auf der graphischen Benutzeroberfläche (18) der Anzeigevorrichtung darstellbar sind.

2. Vorrichtung nach Anspruch 1,
**dadurch gekennzeichnet,**
**dass** die Koordinatenpunkte Punkte eines zweidimensionalen oder dreidimensionalen Koordinatensystems sind.

3. Vorrichtung nach Anspruch 1 oder 2,
**dadurch gekennzeichnet,**
**dass** die ausgewählten Informationselemente (9, 10) auf der graphischen Benutzeroberfläche (18) der Anzeigevorrichtung in einer strukturierten Reihenfolge (17) darstellbar sind.

4. Vorrichtung nach einem der vorhergehenden Ansprüche,
**dadurch gekennzeichnet,**
**dass** die Koordinatenpunkte Punkte eines kartesischen Koordinatensystems sind.

5. Vorrichtung nach einem der vorhergehenden Ansprüche,
**dadurch gekennzeichnet,**
• **dass** die Koordinatenpunkte Punkte eines dreidimensionalen kartesischen Koordinatensystems sind,
• **dass** wenigstens ein zweites Auswahlfenster (13) vorhanden ist,
• **dass** die senkrechten Stützvektoren der Ebenen, welche durch das erste Auswahlfenster (6) und das zweite Auswahlfenster (13) aufgespannt werden, linear unabhängig sind.

6. Vorrichtung nach Anspruch 5,
**dadurch gekennzeichnet,**
**dass** in dem graphisch darstellbaren Objekt (7) mittels der Auswahlfenster (6, 13) dreidimensionale Teilmengen an Koordinatenpunkten und zugehörigen Informationselementen (1) auswählbar sind.

7. Vorrichtung nach einem der vorhergehenden Ansprüche,
**dadurch gekennzeichnet,**
• **dass** ein erstes Informationselement (1) weitere Informationselemente (1) umfasst, deren Koordinatenpunkte innerhalb der mehrdimensionalen Ausdehnung des ersten Informationselements (1) liegen
• und **dass** beim Darstellen des ersten Informationselements (1) auf der graphischen Benutzeroberfläche (18) der Anzeigevorrichtung ein Verweis auf die weiteren Informationselemente (1) vorhanden ist.

8. Vorrichtung nach einem der vorhergehenden Ansprüche,
**dadurch gekennzeichnet,**
**dass** ein Informationselement (1) wenigstens einen Verweis auf eine Zeichnung (32), eine schriftliche Bezeichnung (16), einen Text oder eine graphische Animation enthält.

9. Vorrichtung nach einem der vorhergehenden Ansprüche,
**dadurch gekennzeichnet,**
• **dass** die Informationselemente (1) in wenigstens zwei Teilmengen, insbesondere Informationstypen (2), untergliedert sind,
• **dass** der Informationstyp (2) auf der graphischen Benutzeroberfläche (18) auswählbar ist
• und **dass** bei Auswahl eines Informationstyps (2) die dazu passende Teilmenge eines ausgewählten Informationselements (9) darstellbar ist.

10. Vorrichtung nach einem der vorhergehenden Ansprüche,
**dadurch gekennzeichnet,**
• **dass** wenigstens ein Eingabefeld (14) auf der graphischem Benutzeroberfläche (18) der Anzeigevorrichtung vorgesehen ist, in welches beliebige Suchbegriffe eingebbar sind
• und **dass** auf der graphischen Benutzeroberfläche (18) eine Trefferliste (17) mit den in den Informationselementen (1) oder den dazugehörigen Verweisen auf eine Zeichnung (32), eine schriftliche Bezeichnung (16), einen Text oder eine graphische Animation gefundenen Suchbegriffen darstellbar ist.

11. Vorrichtung nach Anspruch 10,
**dadurch gekennzeichnet,**
• **dass** eine Vergleichseinrichtung vorgesehen ist, um eine Schnittmenge der Trefferliste (17) mit den durch wenigstens ein Auswahlfenster (6, 13) ausgewählten Informationselementen (9) zu berechnen
• und **dass** die in der Schnittmenge vorhandenen Informationselemente (9) auf der graphischen Benutzeroberfläche (18) darstellbar sind.

12. Vorrichtung nach einem der vorhergehenden Ansprüche,
**dadurch gekennzeichnet,**
**dass** die Informationselemente (1) Bauteile oder Bauteilgruppen wenigstens einer Maschine (7) oder wenigstens eines Gerätes sind.

13. Vorrichtung nach einem der vorhergehenden Ansprüche, insbesondere Anspruch 12,
**dadurch gekennzeichnet,**
• **dass** über eine Auswahleinrichtung oder ein Eingabefeld (14) auf der graphischen Benutzeroberfläche (18) eine bestimmte Maschine oder ein bestimmtes Gerät auswählbar ist
• und **dass** nur die in der Speichervorrichtung abgespeicherten Informationselemente (1), welche zu der ausgewählten Maschine oder dem ausgewählten Gerät gehören, auf der graphischen Benutzeroberfläche (18) darstellbar und anwählbar sind.

14. Vorrichtung nach einem der vorhergehenden Ansprüche,
**dadurch gekennzeichnet,**
**dass** die Maschine (7) eine papierverarbeitende Maschine, insbesondere eine Druckmaschine oder Falzmaschine, ist.

15. Verfahren zum Auffinden von Informationselementen (1) in einem oder mehreren Objekten (7),
• wobei die Informationselemente (1) in einer Speichervorrichtung abgespeichert sind,
• wobei die Objekte (7) mittels einer graphischen Benutzeroberfläche (18) auf einer Anzeigevorrichtung dargestellt werden,
**dadurch gekennzeichnet,**
• **dass** die Informationselemente (1) in einem Koordinatensystem eines graphisch dargestellten Objektes (7) angeordnet werden, so dass jedem Informationselement (1) wenigstens ein Koordinatenpunkt in dem graphisch dargestellten Objekt (7) zugeordnet ist,
• **dass** zum Auffinden des gewünschten Informationselements (10) mittels der graphischen Benutzeroberfläche (18) wenigstens ein in der Größe oder Form variables Auswahlfenster (6) benutzt wird, mit welchem eine beliebig große Teilmenge von Koordinatenpunkten und dazugehörigen Informationselementen (1) des Objektes (7) ausgewählt wird,
• und **dass** die ausgewählten Informationselemente (9, 10) auf der graphischen Benutzeroberfläche (18) der Anzeigevorrichtung dargestellt werden.

16. Verfahren nach Anspruch 15,
**dadurch gekennzeichnet,**
**dass** die ausgewählten Informationselemente (9, 10) auf der graphischen Benutzeroberfläche (18) der Anzeigevorrichtung in einer strukturierten Reihenfolge (17) dargestellt werden.

17. Verfahren nach einem der vorhergehenden Ansprüche,
**dadurch gekennzeichnet,**
**dass** in dem graphisch darstellbaren Objekt (7) mittels des einen und eines weiteren Auswahlfensters (6, 13) dreidimensionale Teilmengen an Koordinatenpunkten und zugehörigen Informationselementen (1) ausgewählt werden.

18. Verfahren nach einem der vorhergehenden Ansprüche,
**dadurch gekennzeichnet,**
• **dass** die Informationselemente (1) in wenigstens zwei Teilmengen, insbesondere Informationstypen (2), untergliedert sind,
• **dass** der Informationstyp (2) auf der graphischen Benutzeroberfläche (18) ausgewählt wird
• und **dass** nach Auswahl eines Informationstyps (2) die dazu passende Teilmenge eines ausgewählten Informationselements (9) auf der graphischen Benutzeroberfläche (18) der Anzeigevorrichtung angezeigt wird.
• Verfahren nach einem der vorhergehenden Ansprüche,
**dadurch gekennzeichnet,**
• **dass** beliebige Suchbegriffe in wenigstens ein Eingabefeld (14) auf der graphischem Benutzeroberfläche (18) eingegeben werden
• und **dass** auf der graphischen Benutzeroberfläche (18) eine Trefferliste (17) mit den in den Informationselementen (1) oder den dazugehörigen Verweisen auf eine Zeichnung (32), eine schriftliche Bezeichnung (16), einen Text oder eine graphische Animation gefundenen Suchbegriffen dargestellt wird.

19. Verfahren nach Anspruch 18,
**dadurch gekennzeichnet,**
• **dass** mittels einer Vergleichseinrichtung eine Schnittmenge der Trefferliste (17) mit den durch wenigstens ein Auswahlfenster (6, 13) ausgewählten Informationselementen (9) berechnet wird
• und **dass** die in der Schnittmenge vorhandenen Informationselemente (9) auf der graphischen Benutzeroberfläche (18) dargestellt werden.

20. Verfahren nach einem der vorhergehenden Ansprüche,
**dadurch gekennzeichnet,**
• **dass** die Informationselemente (1) Bauteile oder Bauteilgruppen wenigstens einer Maschine (7) oder wenigstens eines Gerätes sind,
• **dass** über eine Auswahleinrichtung oder ein Eingabefeld (14) auf der graphischen Benutzeroberfläche (18) eine bestimmte Maschine oder ein bestimmtes Gerät ausgewählt wird
• und **dass** nur die in der Speichervorrichtung abgespeicherten Informationselemente (1), welche zu der ausgewählten Maschine oder dem ausgewählten Gerät gehören, auf der graphischen Benutzeroberfläche (18) dargestellt und ausgewählt werden können.
